# EUROPEAN PATENT SPECIFICATION

(11) **EP 3 651 321 B1**
(45) Date of publication and mention of the grant of the patent: **01.02.2023**
(21) Application number: 18828036.6
(22) Date of filing: 26.06.2018
(51) Int. Cl.: H02K 5/22, H02K 11/215, H02K 15/12

(54) **MOTOR DEVICE MANUFACTURING METHOD**
VERFAHREN ZUR HERSTELLUNG EINER MOTORVORRICHTUNG
PROCÉDÉ DE FABRICATION DE DISPOSITIF DE MOTEUR

(30) Priority: 05.07.2017 JP 2017131767
(43) Date of publication of application: 13.05.2020
(73) Proprietor: Mitsuba Corporation, Kiryu-shi, Gunma 376-8555 (JP)
(72) Inventor: UCHIMURA, Hiroyuki, Kiryu-shi Gunma 376-8555 (JP); HOSHINO, Daishi, Kiryu-shi Gunma 376-8555 (JP); ARAKI, Toshiya, Kiryu-shi Gunma 376-8555 (JP); FUSEGAWA, Shuichi, Kiryu-shi Gunma 376-8555 (JP)
(74) Representative: Becker Kurig & Partner Patentanwälte mbB
(86) International application number: PCT/JP2018/024087
(87) International publication number: WO 2019/009132

(56) References cited:
- EP-A1- 2 993 765
- JP-A- 2006 280 058
- JP-A- 2006 280 058
- JP-A- 2009 219 196

## Description

### [Technical Field]

The present disclosure relates to a motor device manufacturing method of a motor device including a rotary shaft, a power feeding member to which a drive current for rotating the rotary shaft is supplied, and a connector member to which an external connector is connected and which supplies the drive current to the power feeding member.

### [Background Art]

In the related art, a motor (motor device) with a thin speed reducing mechanism is used as a driving source for a power window device or the like mounted in a vehicle such as an automobile. Accordingly, a motor can be installed in a narrow-width space inside a door. For example, Patent Literature 1 discloses such a motor device.

The motor device disclosed in Patent Literature 1 includes an armature shaft (rotary shaft) and an output member (output shaft) which extends in a direction intersecting the armature shaft. The armature shaft and the output member are rotatably provided in a gear case. A connector member, to which an external connector is connected, is installed in the gear case. Further, a connector connection part (plug-in part) of the connector member opens in an axial direction of the armature shaft. That is, the external connector is plugged into the connector connection part of the motor device disclosed in Patent Literature 1 in a front-rear direction of a vehicle intersecting a thickness direction of a door.

In addition, in the motor device disclosed in Patent Literature 1, a mounting surface of a sensor substrate (substrate), on which a rotation sensor (sensor) is mounted, is directed in the axial direction of the armature shaft. Accordingly, all of one ends and the other ends of a plurality of sensor conductive members (sensor conductors) embedded in the connector member through insert molding are directed in the axial direction of the armature shaft. Thus, the sensor conductive members can have relatively simple shapes, that is, the sensor conductive members can be molded without being bent in a stereoscopic (three-dimensional) complex manner.

Patent Literature 2 discloses a motor apparatus including: a housing in which a rotation shaft is accommodated; and a connector member which is mounted on the housing and to which an external connector is connected. Patent Literature 3 discloses a process for manufacturing a brush holder in which mutual contact of a plurality of terminals being buried in the brush holder resin body can be suppressed.

### [Citation List]

### [Patent Literature]

[Patent Literature 1] PCT International Publication No. WO2014/178329
[Patent Literature 2] EP 2 993 765 A1
[Patent Literature 3] JP 2006 280058 A

### [Summary of Invention]

### [Technical Problem]

Incidentally, from the viewpoints of a form of installing a motor device inside a door, improvement in assembly of a motor device, and the like, there is a need for directing a plug-in direction of an external connector in an axial direction of an output shaft. However, the motor device disclosed in Patent Literature 1 described above could not cope with such a need. Here, even in a case of coping with the need described above, it is necessary to curb an increase in a thickness dimension of a motor device in the axial direction of the output shaft.

Therefore, sensor conductors are inevitably formed by being three-dimensionally bent in a complex manner. In this case, since a plurality of sensor conductors are disposed closer to each other, it is necessary to form a connector member such that the sensor conductors do not short-circuit each other. Particularly, a plurality of sensor conductors are embedded in a connector member through insert molding. However, if positional relationships therebetween are in disorder, positions of one ends and the other ends of the sensor conductors are displaced, resulting in a problem of difficulties in connection to an external connector or a substrate.

An objective of the present disclosure is to provide a motor device manufacturing method, in which an increase in a thickness dimension of the motor device in an opening direction thereof is curbed even if a plug-in part opens in a direction intersecting an axial direction of a rotary shaft, and each of a plurality of sensor conductors can be precisely disposed inside a connector member.

### [Solution to Problem]

The present invention is provided by the appended claims. The following disclosure serves a better understanding of the present invention. According to an aspect of the present disclosure, there is provided a method for manufacturing a motor device including a rotary shaft, a power feeding member to which a drive current for rotating the rotary shaft is supplied, and a connector member to which an external connector is connected and which supplies the drive current to the power feeding member. The connector member has a plug-in part which opens in a direction intersecting an axial direction of the rotary shaft and into which the external connector is plugged; a substrate retention part which retains a substrate on which a sensor for **detecting a rotation state of the rotary shaft is mounted** such that a mounting surface thereof is directed in the axial direction of the rotary shaft; a plurality of drive conductors which are provided between the plug-in part and the power feeding member, of which one ends are exposed on an inward side of the plug-in part, and of which the other ends are connected to the power feeding member; and a plurality of sensor conductors which are provided between the plug-in part and the substrate, of which one ends are exposed on the inward side of the plug-in part, and of which the other ends are connected to the substrate. The motor device manufacturing method includes a conductor molding step of forming an unseparated conductor which includes a first connection part and a second connection part respectively connecting the plurality of sensor conductors on the plug-in part side and the substrate side, and bending the unseparated conductor such that an extending direction of the first connection part is directed in the axial direction of the rotary shaft and an extending direction of the second connection part is directed in a direction intersecting the axial direction of the rotary shaft; a conductor retention step of setting the plurality of drive conductors and the unseparated conductor in a holder member and causing the holder member to retain the plurality of drive conductors and the unseparated conductor respectively at predetermined intervals; a first separation step of cutting the first connection part such that the plug-in part side of the unseparated conductor is separated; an insert molding step of insert-molding the plurality of drive conductors, the unseparated conductor, and the holder member such that the plug-in part and the substrate retention part are formed; and a second separation step of cutting the second connection part such that the substrate side of the unseparated conductor is separated.

According to another aspect of the present disclosure, there is provided a method for manufacturing a motor device including a rotary shaft, a power feeding member to which a drive current for rotating the rotary shaft is supplied, and a connector member to which an external connector is connected and which supplies the drive current to the power feeding member. The connector member has a plug-in part which opens in a direction intersecting an axial direction of the rotary shaft and into which the external connector is plugged; a substrate retention part which retains a substrate on which a sensor for detecting a rotation state of the rotary shaft is mounted such that a mounting surface thereof is directed in the axial direction of the rotary shaft; a plurality of drive conductors which are provided between the plug-in part and the power feeding member, of which one ends are exposed on an inward side of the plug-in part, and of which the other ends are connected to the power feeding member; and a plurality of sensor conductors which are provided between the plug-in part and the substrate, of which one ends are exposed on the inward side of the plug-in part, and of which the other ends are connected to the substrate. The motor device manufacturing method includes a conductor molding step of forming an unseparated conductor which includes a first connection part and a second connection part respectively connecting the plurality of sensor conductors on the plug-in part side and the substrate side, and bending the unseparated conductor such that an extending direction of the first connection part is directed in the axial direction of the rotary shaft and an extending direction of the second connection part is directed in a direction intersecting the axial direction of the rotary shaft; a conductor retention step of setting the plurality of drive conductors and the unseparated conductor in a holder member and causing the holder member to retain the plurality of drive conductors and the unseparated conductor respectively at predetermined intervals; a first separation step of cutting the first connection part such that the plug-in part side of the unseparated conductor is separated; a first insert molding step of insert-molding the plurality of drive conductors, the unseparated conductor, and the holder member such that a primary molded article including the substrate retention part is formed; a second separation step of cutting the second connection part such that the substrate side of the unseparated conductor is separated; and a second insert molding step of forming a secondary molded article including the plug-in part through insert molding.

According to the aspects of the present disclosure, the holder member has a first opening part exposing the first connection part to the outside.

According to the aspects of the present disclosure, the substrate retention part has a second opening part exposing the second connection part to the outside.

Not comprised by the claims is a motor device including a rotary shaft, a power feeding member to which a drive current for rotating the rotary shaft is supplied, and a connector member to which an external connector is connected and which supplies the drive current to the power feeding member. The connector member has a plug-in part which opens in a direction intersecting an axial direction of the rotary shaft and into which the external connector is plugged; a substrate retention part which retains a substrate on which a sensor for detecting a rotation state of the rotary shaft is mounted such that a mounting surface thereof is directed in the axial direction of the rotary shaft; a plurality of drive conductors which are provided between the plug-in part and the power feeding member, of which one ends are exposed on an inward side of the plug-in part, and of which the other ends are connected to the power feeding member; a plurality of sensor conductors which are provided between the plug-in part and the substrate, of which one ends are exposed on the inward side of the plug-in part, and of which the other ends are connected to the substrate; and a holder member which retains the plurality of drive conductors and the plurality of sensor conductors respectively at predetermined intervals. A plurality of bent parts are provided in the plurality of sensor conductors between the plug-in part and the substrate. The one end sides of the plurality of sensor conductors are arranged in the axial direction of the rotary shaft. The other end sides of the plurality of sensor conductors are arranged in a direction intersecting the axial direction of the rotary shaft. First intermediate parts of the plurality of sensor conductors between the one end sides and the other end sides closer to the one end sides are arranged in the axial direction of the rotary shaft. Second intermediate parts of the plurality of sensor conductors between the one end sides and the other end sides closer to the other end sides are arranged in a direction intersecting the axial direction of the rotary shaft.

### [Advantageous Effects of Invention]

According to the present disclosure, since a plurality of drive conductors and a plurality of sensor conductors are retained in the holder member, the plurality of drive conductors and the plurality of sensor conductors can be precisely disposed at proper locations with respect to the connector member. Therefore, while the sensor conductors which are three-dimensionally bent in a complex manner are used, they can be disposed closer to each other, so that an increase in a thickness dimension of the motor device in an opening direction of the plug-in part can be curbed. In a process of manufacturing a connector member, after installation in the holder member and after insert molding, the first connection part and the second connection part are cut such that the sensor conductors are separated. Therefore, the plurality of sensor conductors can be more precisely disposed at proper locations with respect to the connector member.

### [Brief Description of Drawings)

Fig. 1 is a plan view illustrating a motor device according to the present disclosure.
Fig. 2(a) is a view of a connector member from a back side of the view in Fig. 1, and Fig. 2(b) is a view of the connector member in an arrow A direction in Fig. 1.
Fig. 3(a) is a view of the connector member in an arrow B direction in Fig. 2(a), and Fig. 3(b) is a view of the connector member in an arrow C direction in Fig. 2(b).
Fig. 4 is a perspective view illustrating drive conductive members, sensor conductive members, a sensor substrate, and a female terminal.
Fig. 5 is a plan view illustrating an unseparated conductive member.
Fig. 6(a) and Fig. 6(b) are perspective views illustrating a state after the unseparated conductive member is bent.
Fig. 7(a) and Fig. 7(b) are perspective views illustrating a front side and a rear side of a holder member.
Fig. 8 is a flowchart describing a procedure of assembling a connector member.
Fig. 9 is an explanatory diagram describing [Step of installation in holder member].
Fig. 10 is an explanatory diagram describing [Step of cutting first connection part].
Fig. 11 is an explanatory diagram describing [First insert molding step].
Fig. 12 is an explanatory diagram describing [Second insert molding step] and [Step of cutting second connection part].
Fig. 13 is an explanatory diagram describing [Component assembly step].
Fig. 14 is a flowchart describing a procedure of assembling a connector member according to Embodiment 2.

### [Description of Embodiments]

Hereinafter, Embodiment 1 of the present disclosure will be described in detail using the drawings.

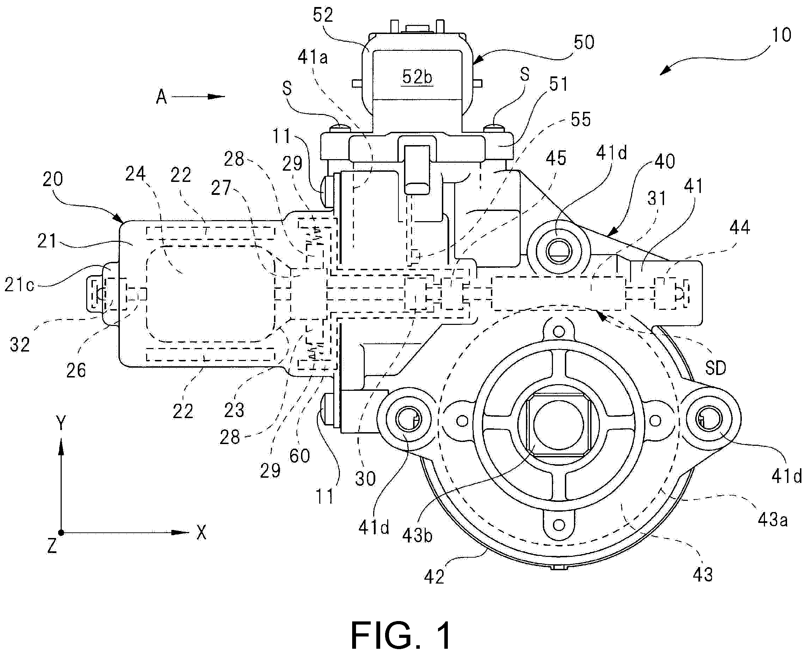

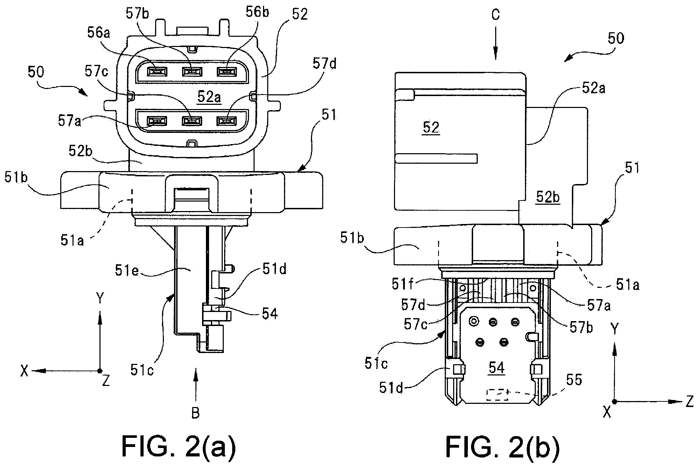

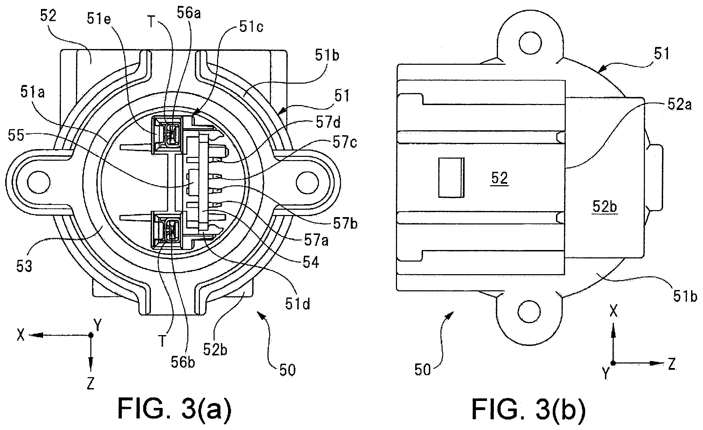

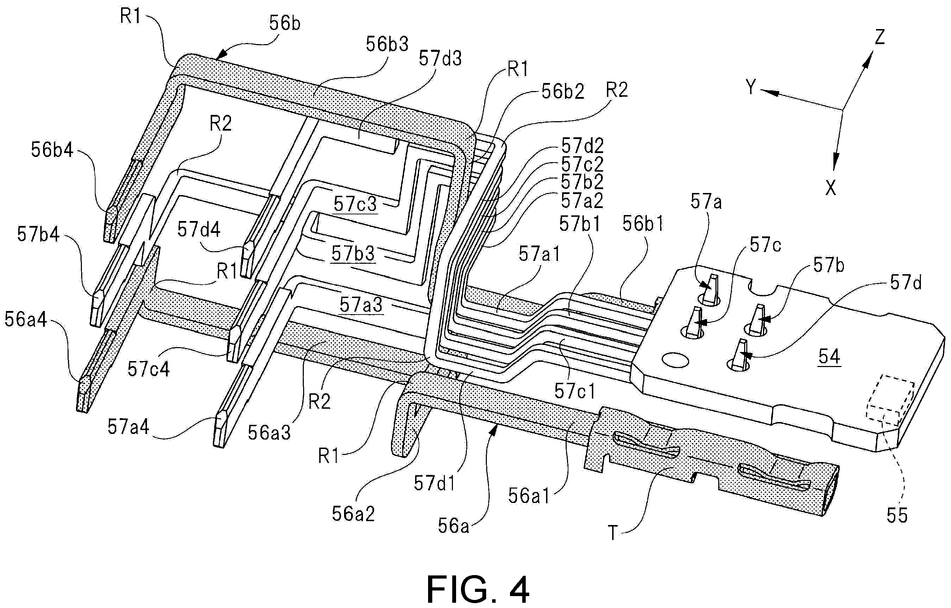

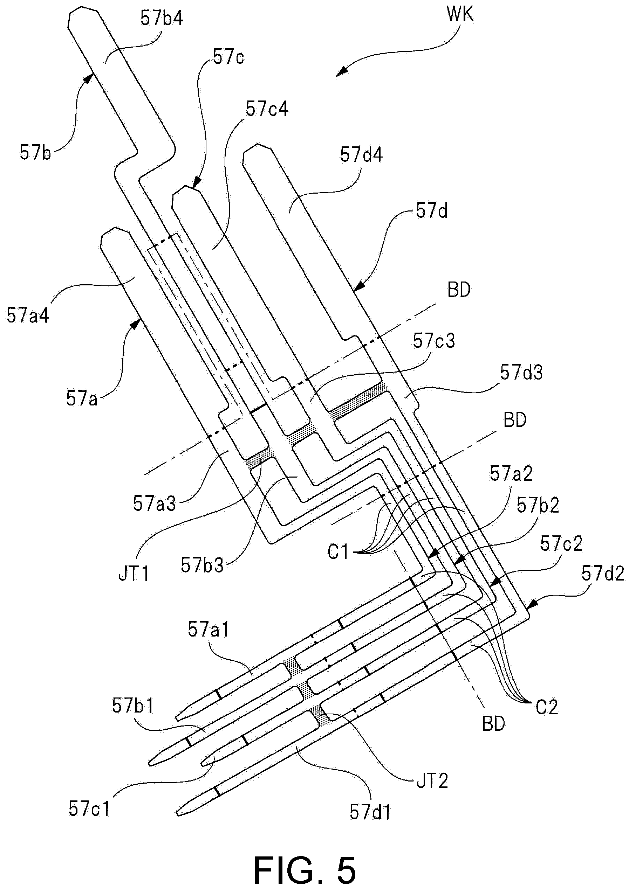

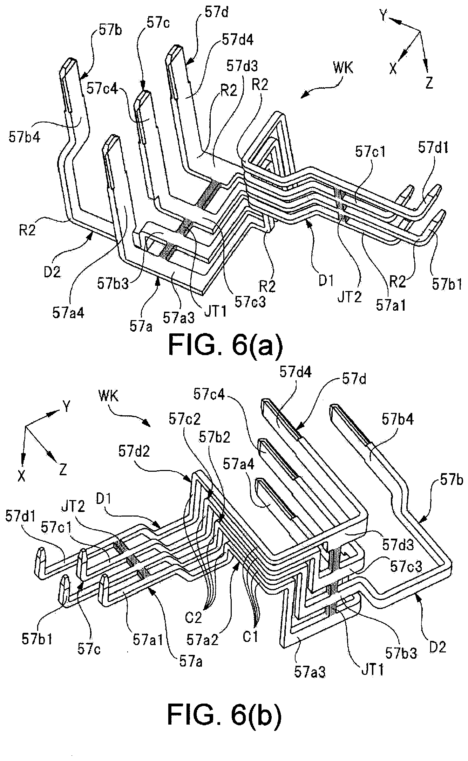

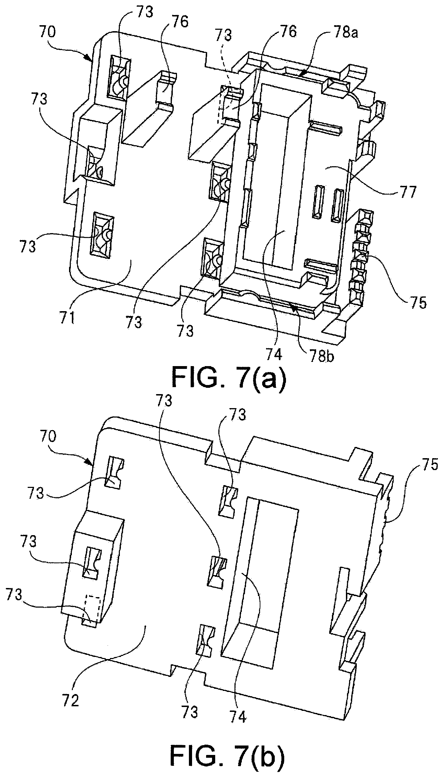

Fig. 1 is a plan view illustrating a motor device according to the present disclosure, Fig. 2(a) is a view of a connector member from a back side of the view in Fig. 1, Fig. 2(b) is a view of the connector member in an arrow A direction in Fig. 1, Fig. 3(a) is a view of the connector member in an arrow B direction in Fig. 2(a), Fig. 3(b) is a view of the connector member in an arrow C direction in Fig. 2(b), Fig. 4 is a perspective view illustrating drive conductive members, sensor conductive members, a sensor substrate, and a female terminal, Fig. 5 is a plan view illustrating an unseparated conductive member, Fig. 6(a) and Fig. 6(b) are perspective views illustrating a state after the unseparated conductive member is bent, and Fig. 7(a) and Fig. 7(b) are perspective views illustrating a front side and a rear side of a holder member, respectively.

A motor device 10 illustrated in Fig. 1 is used as a driving source for a power window device mounted in a vehicle such as an automobile and drives a window regulator for elevating a window glass. The motor device 10 is a small-sized motor with a speed reducing mechanism capable of outputting a large output. The motor device 10 is installed in a narrow-width space formed inside a door of a vehicle. The motor device 10 includes a motor unit 20 and a gear unit 40. The motor unit 20 and the gear unit 40 are connected to each other using a plurality of fastening screws 11 (the diagram illustrates only two).

The motor unit 20 includes a motor case 21 which is constituted of a steel plate formed of a magnetic material into a bottomed tubular shape through pressing or the like. A cross-sectional shape of the motor case 21 is formed to be substantially an oval shape (not illustrated in detail). Accordingly, the motor unit 20 has a flat shape so that the motor device 10 can be installed in a narrow-width space inside a door. Here, a gear case 41 also has a flat shape (not illustrated in detail) along the flat shape of the motor case 21.

A plurality of magnets 22 (the diagram illustrates only two) of which cross sections are formed to have substantially arc shapes are fixed to an inward side of the motor case 21. In addition, an armature 24, around which a coil 23 is wound, is rotatably provided on an inward side of these magnets 22 with predetermined clearances therebetween. Further, a brush holder (power feeding member) 60 is installed on an opening side (the right side in the diagram) of the motor case 21. This brush holder 60 blocks an opening portion of the motor case 21.

An armature shaft (rotary shaft) 26 is fixed to a shaft center of the armature 24. The armature shaft 26 is provided across both the motor unit 20 and the gear unit 40. Specifically, one side (the left side in the diagram) of the armature shaft 26 in an axial direction is disposed inside the motor case 21, and the other side (the right side in the diagram) of the armature shaft 26 in the axial direction is disposed inside the gear case 41.

A commutator 27 formed to have a tubular shape is fixed to a substantially intermediate portion of the armature shaft 26 in the axial direction, which is a part closer to the armature 24. An end part of the coil 23 wound around the armature 24 is electrically connected to this commutator 27.

A plurality of brushes 28 (the diagram illustrates only two) retained in the brush holder 60 are brought into slide contact with an outer circumferential portion of the commutator 27. These brushes 28 are brought into elastic contact toward the commutator 27 by a spring member 29 at a predetermined pressure. Accordingly, when a drive current is supplied to each of the brushes 28 from an in-vehicle controller (not illustrated), a rotation force (electromagnetic force) is generated in the armature 24. Thus, the armature shaft 26 is rotated at a predetermined rotation frequency and rotation torque.

A sensor magnet 30 is fixed to the substantially intermediate portion of the armature shaft 26 in the axial direction on a side of the commutator 27 opposite to the armature 24 side. The sensor magnet 30 is formed to have an annular shape such that it has a plurality of polarities in a rotation direction of the armature shaft 26. The sensor magnet 30 rotates together with the armature shaft 26. Therefore, in accordance with rotation of the armature shaft 26, the state of a magnetic flux line with respect to a rotation sensor 55 disposed on an outward side of the sensor magnet 30 in a radial direction changes.

A worm gear 31 is provided on the other side of the armature shaft 26 in the axial direction beyond the sensor magnet 30. The worm gear 31 is formed to have a tubular shape and is fixed to the armature shaft 26 through press-fitting. A tooth part 43a (not illustrated in detail) of a worm wheel 43 rotatably accommodated inside the gear case 41 is meshed with the worm gear 31. Accordingly, the worm gear 31 is rotated inside the gear case 41 due to rotation of the armature shaft 26, and rotation thereof is transmitted to the worm wheel 43. Here, the worm gear 31 and the worm wheel 43 form a speed reducing mechanism SD.

A bottom part side (the left side in the diagram) of the motor case 21 is formed to have a stepped shape, and a small diameter stepped part 21c having a smaller diameter than a main body portion of the motor case 21 is provided in this portion. A first bearing member 32 is provided in the small diameter stepped part 21c, and this first bearing member 32 rotatably supports one side of the armature shaft 26 in the axial direction.

The gear unit 40 includes the gear case 41 and a connector member 50. A back side of the gear case 41 in the diagram opens, and the opening portion is blocked by a gear cover 42 formed to have substantially a disk shape. The gear case 41 forming the gear unit 40 is formed of a resin material in a predetermined shape and is connected to the opening side of the motor case 21 using a plurality of fastening screws 11.

Inside the gear case 41, each of the worm gear 31 fixed to the armature shaft 26, and the worm wheel 43 in which the tooth part 43a meshed with the worm gear 31 is provided in the outer circumferential portion is rotatably accommodated. Here, the worm gear 31 is formed to have a spiral shape, and the tooth part 43a is inclined at a moderate inclination angle in the axial direction of the worm wheel 43. Accordingly, power can be smoothly transmitted from the worm gear 31 to the worm wheel 43.

An output member 43b is provided at a rotation center of the worm wheel 43. This output member 43b is connected to a driven part (not illustrated) of the window regulator such that power can be transmitted. That is, a rotation speed of the armature shaft 26 is reduced (high torque) by the speed reducing mechanism SD, and the high-torque rotation is output from the output member 43b to the window regulator.

In addition, a second bearing member 44 is provided in a portion corresponding to the other side of the armature shaft 26 in the axial direction inside the gear case 41. This second bearing member 44 rotatably supports the other side of the armature shaft 26 in the axial direction. Moreover, a third bearing member 45 is provided in a portion of the armature shaft 26 between the sensor magnet 30 and the worm gear 31 inside the gear case 41. This third bearing member 45 rotatably supports the substantially intermediate portion in the axial direction of the armature shaft 26.

A connector member assembly hole 41a is provided on a side portion (the upward side in the diagram) of the gear case 41. The connector member 50 is plugged into and fixed to the connector member assembly hole 41a, and a plug-in shaft center which is the shaft center thereof extends in a direction orthogonal to both the shaft center of the armature shaft 26 and the shaft center of the output member 43b.

That is, as illustrated in Fig. 1, the connector member 50 is plugged into the connector member assembly hole 41a in "a Y-axis direction" orthogonal to both "an X-axis direction" and "a Z-axis direction". Here, "the X-axis direction" indicates a vertical width direction of the motor device 10, "the Y-axis direction" indicates a lateral width direction of the motor device 10, and "the Z-axis direction" indicates a thickness direction of the motor device 10, respectively.

In addition, three fixing parts 41d are provided in the gear case 41. Each of these fixing parts 41d is disposed around the gear case 41 such that the output member 43b is surrounded. Further, fixing bolts (not illustrated) for fixing the motor device 10 to the inside of a door of a vehicle are respectively installed in these fixing parts 41d.

In this manner, since the three fixing parts 41d are disposed in a dispersed manner s uch that the output member 43b is surrounded, the motor device 10 can be supported inside a narrow-width door in a well-balanced manner. Accordingly, even when a high load is applied to the motor device 10, the motor device 10 can be effectively prevented from clattering inside a door.

As illustrated in Fig. 2(a) to Fig. 3(b), the connector member 50 is formed of a resin material such as a plastic into a predetermined shape through injection molding. Specifically, the connector member 50 includes an assembly part 51 which is assembled in the gear case 41, and a connector connection part (plug-in part) 52 into which an external connector (not illustrated) is plugged. Further, the assembly part 51 side of the connector member 50 is connected to the brush holder 60. Accordingly, a drive current from the external connector is supplied to the brush holder 60.

The assembly part 51 includes an assembly main body 51a formed to have substantially a columnar shape, and a cap part 51b is provided around the assembly main body 51a. The assembly main body 51a is a portion to be plugged into the connector member assembly hole 41a (refer to Fig. 1). On the other hand, the cap part 51b is a portion fixed to a side portion of the gear case 41 using a pair of fixing screws S (refer to Fig. 1).

Further, in a state where the assembly main body 51a is plugged into the connector member assembly hole 41a, an O-ring 53 (refer to Fig. 3(a)) is sandwiched between the assembly main body 51a and the connector member assembly hole 41a. That is, the O-ring 53 tightly adheres to both the assembly main body 51a and the connector member assembly hole 41a in an elastically deformed state. The O-ring 53 is a component which functions as a seal member, and a general-purpose O-ring constituted of a rubber or the like is used.

A shaft center of the assembly main body 51a coincides with a plug-in shaft center of the connector member 50, and a case part 51c formed to have substantially a rectangular parallelepiped shape is integrally provided on a side (downward side in Fig. 2(a) and Fig. 2(b)) of the assembly main body 51a opposite to the connector connection part 52 side in the axial direction. This case part 51c extends in the axial direction (Y-axis direction) of the plug-in shaft center and is formed to have a substrate retention part 51d and a terminal accommodation part 51e. Further, as illustrated in Fig. 2(a), the substrate retention part 51d and the terminal accommodation part 51e overlap each other in the axial direction (X-axis direction) of the armature shaft 26 (refer to Fig. 1).

The substrate retention part 51d retains a sensor substrate (substrate) 54. For example, the sensor substrate 54 is formed of a phenol resin or the like into a substantially rectangular shape, and the rotation sensor 55 (dotted line portion) is mounted in a central portion in a width direction (transverse direction in Fig. 2(b)) of the sensor substrate 54. That is, a mounting surface of the sensor substrate 54 is directed in the axial direction (X-axis direction) of the armature shaft 26.

Here, the rotation sensor 55 constitutes a sensor in the present disclosure. The rotation sensor 55 is disposed on the outward side of the sensor magnet 30 (refer to Fig. 1) in the radial direction and serves as an electromagnetic sensor capturing a direction of the magnetic flux line of the sensor magnet 30 or a change therein. Accordingly, the rotation sensor 55 detects a rotation state of the armature shaft 26, that is, the rotation direction and the rotation speed of the armature shaft 26. Specifically, the rotation sensor 55 includes a magneto resistance element (MR element) which serves as a sensor element and also serves as a GMR sensor in which a giant magneto resistance effect is applied.

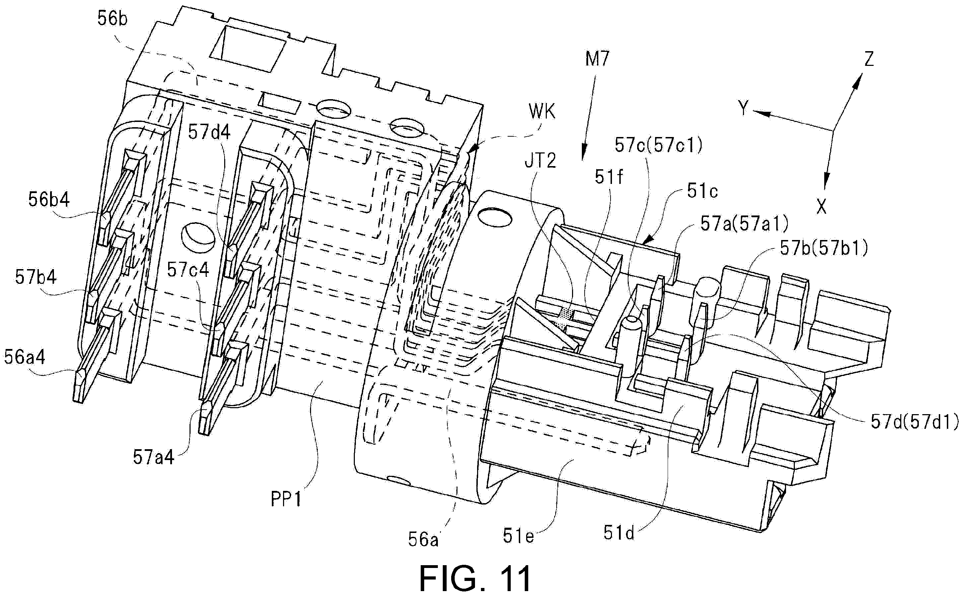

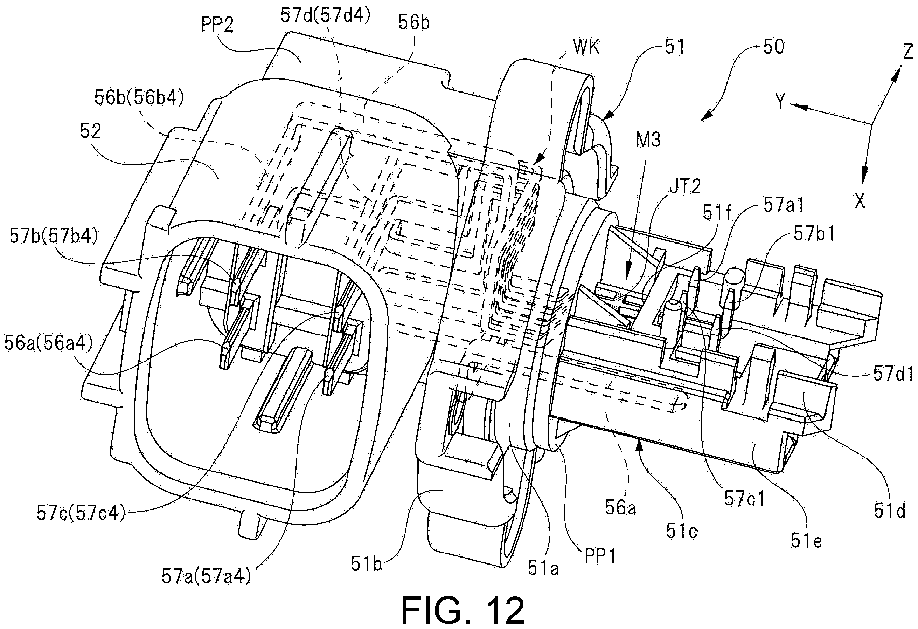

In addition, as illustrated in Fig. 2(b), a case opening part 51f is formed on a base end side (the upward side in the diagram) of the substrate retention part 51d. This case opening part 51f constitutes a second opening part in the present disclosure, such that a second connection part JT2 of an unseparated conductive member WK is exposed to the outside in a process of manufacturing the connector member 50 (refer to Figs. 11 and 12).

The connector connection part 52 is formed to have substantially a box shape, and the connector connection part 52 opens in the axial direction (Z-axis direction) of the output member 43b. Further, a bottom part 52a side of the connector connection part 52 is integrated with the assembly main body 51a with a neck part 52b therebetween. Specifically, the neck part 52b is disposed at a location offset in the axial direction of the output member 43b with respect to the shaft center of the assembly main body 51a.

Accordingly, as illustrated in Fig. 3(b), when the connector member 50 is viewed in the axial direction (Y-axis direction) of the plug-in shaft center, the connector connection part 52 does not stick out significantly from the assembly main body 51a. Thus, the connector member 50 is prevented from protruding significantly in the thickness direction of the motor device 10, and an increase in dimension of the motor device 10 in the thickness direction is curbed.

In this manner, the substrate retention part 51d of the connector member 50 is provided such that the mounting surface of the sensor substrate 54 is directed in the axial direction (X-axis direction) of the armature shaft 26. In addition, the assembly main body 51a of the connector member 50 is formed to have substantially a columnar shape having a dimension shortened in the axial direction and a thin wall thickness. Moreover, the neck part 52b of the connector member 50 is provided at a location offset in the axial direction (Z-axis direction) of the output member 43b from the shaft center of the assembly main body 51a. In addition, the connector connection part 52 of the connector member 50 opens in the axial direction (Z-axis direction) of the output member 43b without sticking out significantly from the assembly main body 51a.

In this manner, the connector member 50 is formed to have a three-dimensional (stereoscopic) complex shape, such that the motor device 10 is prevented from being increased in size. Further, inside the connector member 50 having such a complex shape, as illustrated in Fig. 4, a pair of drive conductive members (drive conductors) 56a and 56b and four sensor conductive members (sensor conductors) 57a, 57b, 57c, and 57d (six in total) are embedded individually through insert molding without interfering (short-circuiting) with each other.

One ends of the pair of drive conductive members 56a and 56b and one ends of the four sensor conductive members 57a to 57d are exposed on the inward side of the connector connection part 52 forming the connector member 50.

That is, one ends of these conductive members 56a, 56b, and 57a to 57d (six in total) are electrically connected to the external connector. Here, in Fig. 4, in order to easily distinguish between the pair of drive conductive members 56a and 56b and the four sensor conductive members 57a to 57d, the pair of drive conductive members 56a and 56b are shaded.

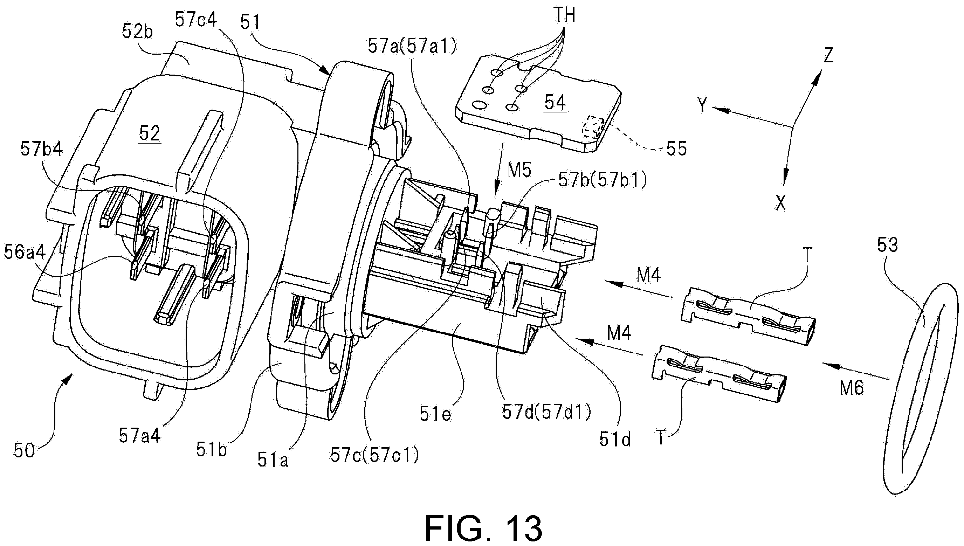

Female terminals T (refer to Figs. 4 and 13) are respectively installed at the other ends of the pair of drive conductive members 56a and 56b, and these female terminals T are accommodated in the respective terminal accommodation parts 51e (refer to Fig. 3(a)). Further, a pair of female terminals T accommodated in the terminal accommodation parts 51e are electrically connected to a pair of male terminals (not illustrated) provided in the brush holder 60.

In this manner, the pair of drive conductive members 56a and 56b are provided between the connector connection part 52 and the brush holder 60. Accordingly, a drive current from the external connector is supplied to each of the brushes 28 of the brush holder 60.

Moreover, the other ends of the four sensor conductive members 57a to 57d are electrically connected to the sensor substrate 54 using a connection means (not illustrated) such as soldering. That is, the four sensor conductive members 57a to 57d are provided between the connector connection part 52 and the sensor substrate 54. Accordingly, a detection signal of the rotation sensor 55 is sent out to the in-vehicle controller via the four sensor conductive members 57a to 57d and the external connector.

Each of the pair of drive conductive members 56a and 56b is formed to have a hook shape by punching a metal plate such as brass having excellent conductivity into a predetermined shape and bending the metal plate in a plate thickness direction thereof a plurality of times.

Specifically, the pair of drive conductive members 56a and 56b include first drive conductive parts 56a1 and 56b1 accommodated in the respective terminal accommodation parts 51e, second drive conductive parts 56a2 and 56b2 embedded in the assembly main body 51a, third drive conductive parts 56a3 and 56b3 embedded in the neck part 52b, and fourth drive conductive parts 56a4 and 56b4 exposed on the inward side of the connector connection part 52.

Further, drive side bent parts R1 bent at 90 degrees are provided respectively between the first drive conductive parts 56a1 and 56b1 and the second drive conductive parts 56a2 and 56b2, between the second drive conductive parts 56a2 and 56b2 and the third drive conductive parts 56a3 and 56b3, and between the third drive conductive parts 56a3 and 56b3 and the fourth drive conductive parts 56a4 and 56b4.

In addition, the plate thickness direction of the first drive conductive parts 56a1 and 56b1 coincides with the axial direction (X-axis direction) of the armature shaft 26. Accordingly, an increase in a thickness dimension of the terminal accommodation part 51e (case part 51c) in the axial direction of the armature shaft 26 is curbed.

Moreover, the plate thickness direction of the second drive conductive parts 56a2 and 56b2 coincides with the axial direction (Y-axis direction) of the plug-in shaft center of the connector member 50. Accordingly, an increase in a thickness dimension of the connector member 50 (height dimension of the connector member 50) in the lateral width direction of the motor device 10 is curbed.

In addition, the plate thickness direction of the third drive conductive parts 56a3 and 56b3 coincides with the axial direction (X-axis direction) of the armature shaft 26. Accordingly, an increase in a thickness dimension of the neck part 52b in the axial direction of the armature shaft 26 is curbed.

Moreover, the plate thickness direction of the fourth drive conductive parts 56a4 and 56b4 coincides with the axial direction (Y-axis direction) of the plug-in shaft center of the connector member 50. Accordingly, an increase in a thickness dimension of the connector member 50 (height dimension of the connector member 50) in the lateral width direction of the motor device 10 is curbed.

Each of the four sensor conductive members 57a to 57d is formed to have a hook shape by punching a metal plate such as brass having excellent conductivity into a predetermined shape and bending the metal plate in the plate thickness direction thereof a plurality of times.

Specifically, the four sensor conductive members 57a to 57d include first sensor conductive parts 57a1 to 57d1 electrically connected to the sensor substrate 54, second sensor conductive parts 57a2 to 57d2 embedded in the assembly main body 51a, third sensor conductive parts 57a3 to 57d3 embedded in the neck part 52b, and fourth sensor conductive parts 57a4 to 57d4 exposed on the inward side of the connector connection part 52.

Further, sensor side bent parts R2 bent at 90 degrees are provided respectively between the first sensor conductive parts 57a1 to 57d1 and the second sensor conductive parts 57a2 to 57d2, between the second sensor conductive parts 57a2 to 57d2 and the third sensor conductive parts 57a3 to 57d3, and between the third sensor conductive parts 57a3 to 57d3 and the fourth sensor conductive parts 57a4 to 57d4.

However, first stepped parts D1 are provided in substantially central portions of the first sensor conductive parts 57a1 to 57d1 in a longitudinal direction (refer to Fig. 6(a) and Fig. 6(b)). Accordingly, the other ends of the first sensor conductive parts 57a1 to 57d1 are guided to the sensor substrate 54. In addition, a second stepped part D2 is provided in a substantially central portion of the third sensor conductive part 57b3 in the longitudinal direction (refer to Fig. 6(a) and Fig. 6(b)). Accordingly, the neck part 52b, in which the second stepped part D2 is embedded, is reinforced.

The first sensor conductive parts 57a1 to 57d1 and the second sensor conductive parts 57a2 to 57d2 have slender rod shapes having substantially square cross sections. Accordingly, while an increase in size of the connector member 50 is curbed, it is easily bent. Instead of a drive current (large current), a sensor signal (weak current) flows in the four sensor conductive members 57a to 57d. Therefore, the four sensor conductive members 57a to 57d need only have a certain degree of rigidity, and there is no problem with the slender rod shape as illustrated in the diagram.

In addition, the plate thickness direction of the third sensor conductive parts 57a3 to 57d3 coincides with the axial direction (Z-axis direction) of the output member 43b. Accordingly, an increase in a thickness dimension of the neck part 52b in the axial direction of the output member 43b is curbed.

Moreover, the plate thickness direction of the fourth sensor conductive parts 57a4 to 57d4 coincides with the axial direction (Y-axis direction) of the plug-in shaft center of the connector member 50. Accordingly, an increase in a thickness dimension of the connector member 50 (height dimension of the connector member 50) in the lateral width direction of the motor device 10 is curbed.

Here, inside the connector connection part 52, one ends of the conductive members 56a, 56b, and 57a to 57d (six in total) are arranged in "the X-axis direction" in three lines (three stages) and are arranged in "the Y-axis direction" in two lines (two rows). Due to this constitution as well, an increase in a thickness dimension of the connector member 50 (height dimension of the connector member 50) in the lateral width direction of the motor device 10 is curbed.

The four sensor conductive members 57a to 57d are formed by separating the unseparated conductive member (unseparated conductor) WK having a shape as illustrated in Fig. 5 into four respective members. However, separation work of separating the four sensor conductive members 57a to 57d is completed after each of the pair of drive conductive members 56a and 56b (refer to Fig. 4) and the unseparated conductive member WK is subjected to insert molding. A procedure of assembling the connector member 50 will be described below in detail.

The unseparated conductive member WK illustrated in Fig. 5 is shown in a state before it is bent and is formed by punching a metal plate such as brass having excellent conductivity. Here, the thick solid line in the diagram indicates a portion bent in a "mountain fold" manner, and the thick dotted line in the diagram indicates a portion bent in a "valley fold" manner.

A first connection part JT1 (shaded portion) connecting the four sensor conductive members 57a to 57d is provided on one end side (the upward side in the diagram) of the unseparated conductive member WK. Specifically, the first connection part JT1 connects portions of the third sensor conductive parts 57a3 to 57d3 closer to the fourth sensor conductive parts 57a4 to 57d4 to each other.

On the other hand, the second connection part JT2 (shaded portion) connecting the four sensor conductive members 57a to 57d is provided on the other end side (the downward side in the diagram) of the unseparated conductive member WK. Specifically, the second connection part JT2 connects portions of the other end side (sensor substrate 54 side) of the first sensor conductive parts 57a1 to 57d1 in the longitudinal direction to each other.

In this manner, since the first connection part JT1 and the second connection part JT2 are provided, when the connector member 50 is subjected to insert molding, the four sensor conductive members 57a to 57d which are three-dimensionally bent in a complex manner and are disposed closer to each other can be precisely located at proper locations without being displaced. However, the first connection part JT1 and the second connection part JT2 (shaded portions) are cut and removed after positioning of the four sensor conductive members 57a to 57d ends in a process of manufacturing the connector member 50.

In addition, the first connection part JT1 and the second connection part JT2 are respectively disposed in the vicinity of the fourth sensor conductive parts 57a4 to 57d4 and the first sensor conductive parts 57a1 to 57d1, thereby particularly improving location accuracy of the portions of the fourth sensor conductive parts 57a4 to 57d4 to which the external connector is connected and the portions of the first sensor conductive parts 57a1 to 57d1 to which the sensor substrate 54 is connected. Therefore, while connection of the external connector is facilitated, connection work with respect to the sensor substrate 54 can be facilitated.

Reference lines BD (three places in total) illustrated in Fig. 5 respectively indicate "boundary portions" between the first sensor conductive parts 57a1 to 57d1 and the second sensor conductive parts 57a2 to 57d2, between the second sensor conductive parts 57a2 to 57d2 and the third sensor conductive parts 57a3 to 57d3, and between the third sensor conductive parts 57a3 to 57d3 and the fourth sensor conductive parts 57a4 to 57d4.

When the unseparated conductive member WK is bent along marks (thick solid lines and thick dotted lines) of "mountain fold" and "valley fold", a state illustrated in Fig. 6(a) and Fig. 6(b) is realized. That is, a plurality of sensor side bent parts R2 bent at a right angle, the first stepped parts D1 in the portions of the first sensor conductive parts 57a1 to 57d1, and the second stepped part D2 in a portion of the third sensor conductive part 57b3 are formed between one end and the other end of the unseparated conductive member WK in the longitudinal direction.

Further, when the unseparated conductive member WK after being bent is disposed based on the vertical width direction of the motor device 10 (axial direction of the armature shaft 26, that is, "the X-axis direction"), the lateral width direction of the motor device 10 (axial direction of the plug-in shaft center of the connector member 50, that is, "the Y-axis direction"), and the thickness direction of the motor device 10 (axial direction of the output member 43b, that is, "the Z-axis direction"), an extending direction of the first connection part JT1 is directed in the axial direction (X-axis direction) of the armature shaft 26. In addition, an extending direction of the second connection part JT2 is directed in the axial direction (Z-axis direction) of the output member 43b.

In addition, with reference to Fig. 6(a) and Fig. 6(b), on one end side of the four sensor conductive members 57a to 57d in the longitudinal direction, in the portions of the fourth sensor conductive parts 57a4 to 57d4, the remaining fourth sensor conductive parts 57a4, 57c4, and 57d4 excluding the fourth sensor conductive part 57b4 are arranged in the axial direction (X-axis direction) of the armature shaft 26. In the portions of the third sensor conductive parts 57a3 to 57d3, all the third sensor conductive parts 57a3 to 57d3 are arranged in the axial direction (X-axis direction) of the armature shaft 26.

Moreover, on the other end side of the four sensor conductive members 57a to 57d in the longitudinal direction, all the first sensor conductive parts 57a1 to 57d1 are arranged in the axial direction (Z-axis direction) of the output member 43b, which is a direction intersecting the axial direction of the armature shaft 26.

In addition, the four sensor conductive members 57a to 57d are arranged as follows between one end and the other end in the longitudinal direction and in the portions of the second sensor conductive parts 57a2 to 57d2.

Specifically, as illustrated in Fig. 5, in the portions of the second sensor conductive parts 57a2 to 57d2, parts of the sensor conductive members 57a to 57d closer to the one end side in the longitudinal direction are referred to as first intermediate parts C1, and parts of the sensor conductive members 57a to 57d closer to the other end side in the longitudinal direction are referred to as second intermediate parts C2. Consequently, as illustrated in Fig. 6(b), all the first intermediate parts C1 are arranged in the axial direction (X-axis direction) of the armature shaft 26, and all the second intermediate parts C2 are arranged in the axial direction (Z-axis direction) of the output member 43b, which is a direction intersecting the axial direction of the armature shaft 26.

Next, a holder member 70, which retains the pair of drive conductive members 56a and 56b and the unseparated conductive member WK (four sensor conductive members 57a to 57d) respectively at predetermined intervals such that they do not short-circuit each other in the process of manufacturing the connector member 50, will be described.

The holder member 70 is embedded inside the connector member 50 through insert molding in the process of manufacturing the connector member 50.

As illustrated in Fig. 7(a) and Fig. 7(b), the holder member 70 is formed to have substantially a quadrangular flat plate shape by performing injection molding or the like of a resin material such as a plastic. The holder member 70 includes a front surface 71 and a rear surface 72. Insertion holes 73 (six in total), through which the fourth drive conductive parts 56a4 and 56b4 of the pair of drive conductive members 56a and 56b and the fourth sensor conductive parts 57a4 to 57d4 of the four sensor conductive members 57a to 57d are inserted, are provided between the front surface 71 and the rear surface 72.

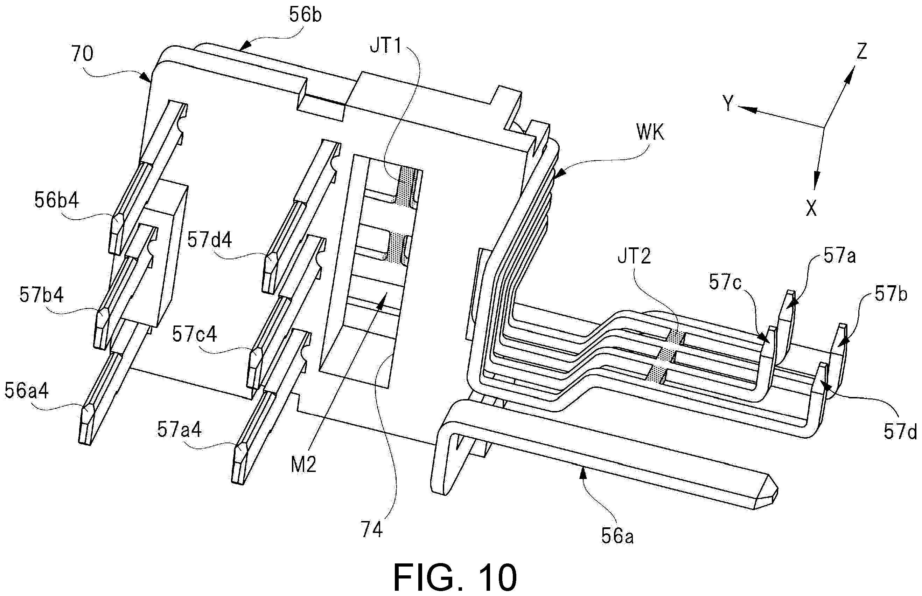

A holder opening part 74 formed to have substantially a rectangular shape is formed in a portion of the holder member 70 closer to the center. This holder opening part 74 constitutes a first opening part in the present disclosure. In a state where the unseparated conductive member WK is assembled in the holder member 70, the first connection part JT1 of the unseparated conductive member WK is exposed to the outside (refer to Fig. 10).

In addition, a first support part 75 supporting the portions of the third sensor conductive parts 57a3 to 57d3 of the four sensor conductive members 57a to 57d closer to the second sensor conductive parts 57a2 to 57d2 is provided on the front surface 71 side of the holder member 70 and on a side of the holder opening part 74 opposite to the insertion holes 73 side. The first support part 75 retains the portions of the third sensor conductive parts 57a3 to 57d3 closer to the second sensor conductive parts 57a2 to 57d2 at predetermined intervals such that they do not short-circuit each other.

Moreover, a pair of second support parts 76 are provided on the front surface 71 side of the holder member 70 and on the insertion holes 73 side of the holder opening part 74. These second support parts 76 retain the second stepped part D2 in the third sensor conductive part 57d3 of the sensor conductive member 57d.

In addition, a third support part 77 is provided on the front surface 71 side of the holder member 70 and around the holder opening part 74. This third support part 77 retains the third sensor conductive parts 57a3 to 57d3 of the four sensor conductive members 57a to 57d.

Moreover, a first support groove 78a and a second support groove 78b are provided on the front surface 71 side of the holder member 70 and on both sides of the holder opening part 74 in the longitudinal direction. Further, the drive conductive member 56a on one side (refer to Fig. 4) is installed in the first support groove 78a, and the drive conductive member 56b on the other side (refer to Fig. 4) is installed in the second support groove 78b.

Accordingly, the pair of drive conductive members 56a and 56b and the four sensor conductive members 57a to 57d are installed in the holder member 70. Therefore, each of these conductive members 56a, 56b, and 57a to 57d (six in total) can be in a state of being precisely located. Thus, in "an insert molding step" performed after the holder member 70 is installed, occurrence of a problem such as location displacement in each of the conductive members 56a, 56b, and 57a to 57d is prevented reliably.

Next, a method for manufacturing the motor device 10 formed as described above, particularly, the procedure of assembling the connector member 50 will be described in detail using the drawings.

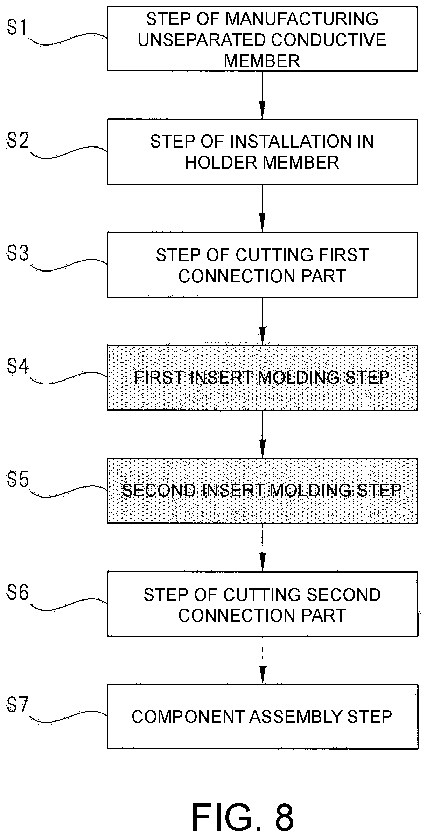

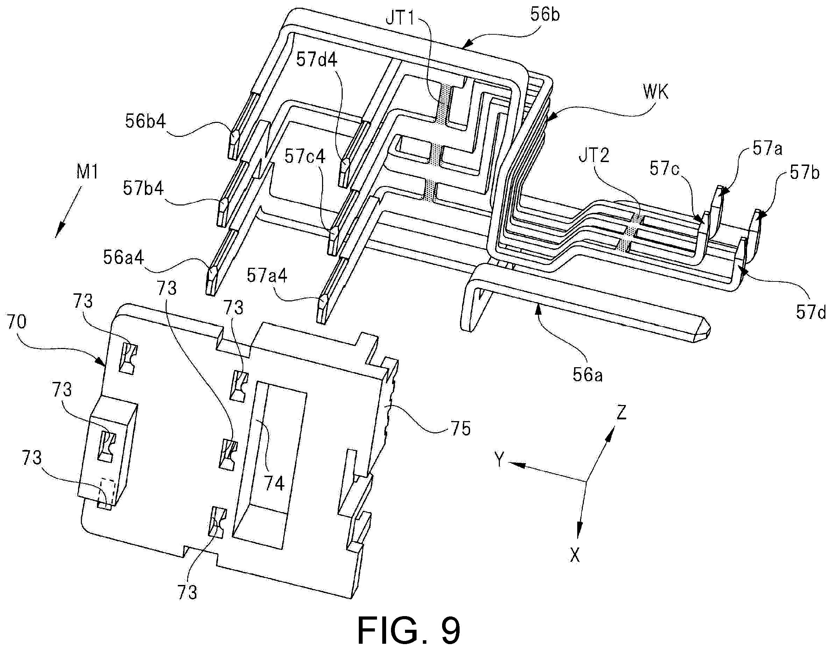

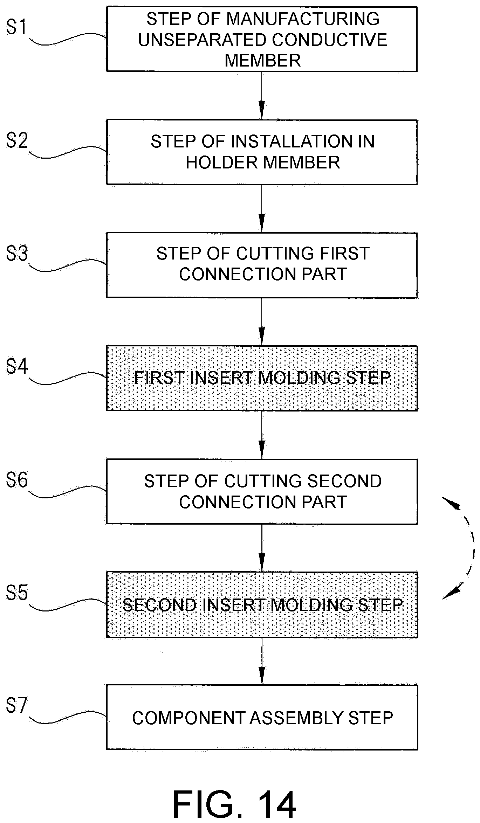

Fig. 8 is a flowchart describing a procedure of assembling a connector member, Fig. 9 is an explanatory diagram describing [Step of installation in holder member], Fig. 10 is an explanatory diagram describing [Step of cutting first connection part], Fig. 11 is an explanatory diagram describing [First insert molding step], Fig. 12 is an explanatory diagram describing [Second insert molding step] and [Step of cutting second connection part], Fig. 13 is an explanatory diagram describing [Component assembly step], and Fig. 14 is a flowchart describing a procedure of assembling a connector member according to Embodiment 2, respectively.

### [Step of manufacturing unseparated conductive member)

As illustrated in Fig. 8, first, in Step S1, the unseparated conductive member WK (refer to Figs. 5 and 6) is manufactured. Specifically, a metal plate (material) such as brass having excellent conductivity is punched using a press molding apparatus (not illustrated). Accordingly, the unseparated conductive member WK including the first connection part JT1 and the second connection part JT2 respectively connecting the four sensor conductive members 57a to 57d on the connector connection part 52 side and the sensor substrate 54 side is formed.

Subsequently, work of bending the unseparated conductive member WK is performed a plurality of times. Accordingly, as illustrated in Fig. 6(a) and Fig. 6(b) the unseparated conductive member WK is formed. Due to the bending work in this Step S1, as illustrated in Fig. 6(a) and Fig. 6(b), the extending direction of the first connection part JT1 is directed in the axial direction (X-axis direction) of the armature shaft 26, and the extending direction of the second connection part JT2 is directed in the axial direction (Z-axis direction) of the output member 43b, which is a direction intersecting the axial direction of the armature shaft 26.

Accordingly, a step of manufacturing an unseparated conductive member (Step S1) is completed.

The step of manufacturing an unseparated conductive member in Step S1 constitutes a conductor molding step in the present disclosure.

In addition, in the step of manufacturing an unseparated conductive member, bending work may be performed after a metal plate (material) is punched at a time, or a metal plate may be gradually punched while bending work is performed.

### [Step of installation in holder member]

In succeeding Step S2 (refer to Fig. 8), as illustrated in Fig. 9, work of setting each of the unseparated conductive member WK formed in Step S1 and the pair of drive conductive members 56a and 56b manufactured in a different manufacturing process in the holder member 70 manufactured in a different manufacturing process is performed. Specifically, tip parts of the fourth drive conductive parts 56a4 and 56b4 of the pair of drive conductive members 56a and 56b and tip parts of the fourth sensor conductive parts 57a4 to 57d4 of the four sensor conductive members 57a to 57d are respectively inserted through six insertion holes 73 from the front surface 71 side (back side of the view) of the holder member 70, as indicated by an arrow M1.

Consequently, the portions of the third sensor conductive parts 57a3 to 57d3 closer to the second sensor conductive parts 57a2 to 57d2 (refer to Fig. 6(b)) are retained by the first support part 75 at predetermined intervals.

In addition, the second stepped part D2 (refer to Fig. 6(b)) of the third sensor conductive part 57d3 of the sensor conductive member 57d is retained by the pair of second support parts 76 (refer to Fig. 7(a)).

Moreover, the third sensor conductive parts 57a3 to 57d3 (refer to Fig. 6(b)) of the four sensor conductive members 57a to 57d are retained by the third support part 77 (refer to Fig. 7(a)).

In addition, the pair of drive conductive members 56a and 56b are respectively installed in the first support groove 78a and the second support groove 78b (refer to Fig. 7(a)).

Therefore, the pair of drive conductive members 56a and 56b and the unseparated conductive member WK are retained in the holder member 70 respectively at predetermined intervals (such that they do not short-circuit), and the first connection part JT1 of the unseparated conductive member WK is exposed to the outside from the holder opening part 74 (refer to Fig. 10).

Accordingly, a step of installation in the holder member (Step S2) is completed.

The step of installation in the holder member in Step S2 constitutes a conductor retention step in the present disclosure.

### [Step of cutting first connection part]

In succeeding Step S3 (refer to Fig. 8), as illustrated in Fig. 10, work of cutting the first connection part JT1 of the unseparated conductive member WK assembled in the holder member 70 is performed. Specifically, work of removing the first connection part JT1 (shaded portion) is performed by causing a cutting tool (not illustrated) to face the holder opening part 74 in the direction of an arrow M2. The work of removing this first connection part JT1 is performed simultaneously at three places.

Accordingly, the connector connection part 52 side (fourth sensor conductive parts 57a4 to 57d4 side) of the unseparated conductive member WK is separated. More specifically, the portions of the third sensor conductive parts 57a3 to 57d3 (refer to Fig. 6(b)) of the four sensor conductive members 57a to 57d are separated individually, and they are in a state of being electrically independent from each other (in a state of not short-circuiting each other).

Accordingly, a step of cutting a first connection part (Step S3) is completed.

The step of cutting a first connection part in Step S3 constitutes a first separation step in the present disclosure.

### [First insert molding step]

In succeeding Step S4 (refer to Fig. 8), as illustrated in Fig. 11, the pair of drive conductive members 56a and 56b, the unseparated conductive member WK (from which the first connection part JT1 is removed), and the holder member 70 (not illustrated in Fig. 11) are subjected to insert molding. Accordingly, a primary molded resin component (primary molded article) PP1 is molded around the pair of drive conductive members 56a and 56b, the unseparated conductive member WK, and the holder member 70. At this time, since the pair of drive conductive members 56a and 56b and the unseparated conductive member WK are retained by the holder member 70 in a state of being located at proper locations, a problem such as location displacement does not occur in the pair of drive conductive members 56a and 56b and the unseparated conductive member WK.

Further, the case part 51c constituted of the substrate retention part 51d and the terminal accommodation part 51e is formed by molding the primary molded resin component PP1. Thus, the case opening part 51f exposing the second connection part JT2 of the unseparated conductive member WK to the outside is formed on the base end side (the left side in the diagram) of the substrate retention part 51d. Here, in a portion of the substrate retention part 51d, the first sensor conductive parts 57a1 to 57d1 of the four sensor conductive members 57a to 57d are exposed.

Accordingly, a first insert molding step (Step S4) is completed.

### [Second insert molding step]

In succeeding Step S5 (refer to Fig. 8), as illustrated in Fig. 12, the primary molded resin component PP1 including the pair of drive conductive members 56a and 56b, the unseparated conductive member WK (from which the first connection part JT1 is removed), and the holder member 70 (not illustrated in Fig. 12) is subjected to insert molding. Accordingly, a secondary molded resin component (secondary molded article) PP2 is molded in a part around the primary molded resin component PP1. The secondary molded resin component PP2 allows a portion of the case part 51c to remain in a state of being exposed to the outside.

Further, the assembly part 51 and the connector connection part 52 are formed by molding the secondary molded resin component PP2. Thus, the fourth drive conductive parts 56a4 and 56b4 of the pair of drive conductive members 56a and 56b and the fourth sensor conductive parts 57a4 to 57d4 of the four sensor conductive members 57a to 57d are exposed on the inward side of the connector connection part 52.

Accordingly, a second insert molding step (Step S5) is completed.

Here, [First insert molding step] (shaded portion) of Step S4 and [Second insert molding step] (shaded portion) of Step S5 illustrated in Fig. 8 constitute an insert molding step in the present disclosure.

### [Step of cutting second connection part]

In succeeding Step S6 (refer to Fig. 8), as illustrated in Fig. 12, work of cutting the second connection part JT2 of the unseparated conductive member WK embedded in the primary molded resin component PP1 is performed. Specifically, work of removing the second connection part JT2 (shaded portion) is performed by causing a cutting tool (not illustrated) to face the case opening part 51f in the direction of an arrow M3. The work of removing this second connection part JT2 is performed simultaneously at three places.

Accordingly, the sensor substrate 54 (refer to Fig. 2(b)) side (first sensor conductive parts 57a1 to 57d1 side) of the unseparated conductive member WK is separated. Thus, the portions of the first sensor conductive parts 57a1 to 57d1 are in a state of being electrically independent from each other (in a state of not short-circuiting each other), and the four sensor conductive members 57a to 57d are completely separated in the entire region thereof.

Accordingly, a step of cutting a second connection part (Step S6) is completed, and the connector member 50 is brought to completion.

The step of cutting a second connection part in Step S6 constitutes a second separation step in the present disclosure.

### [Component assembly step]

In succeeding Step S7 (refer to Fig. 8), as illustrated in Fig. 13, work of assembling the pair of female terminals T (components), the sensor substrate 54, and the O-ring 53 in the connector member 50 is performed.

First, as indicated by arrows M4, the pair of female terminals T are caused to face the terminal accommodation part 51e and are plugged into the terminal accommodation part 51e. Consequently, the pair of female terminals T are accommodated inside the terminal accommodation part 51e, and one side (the left side in the diagram) of the pair of female terminals T in the longitudinal direction is installed in the first drive conductive parts 56a1 and 56b1 of the pair of drive conductive members 56a and 56b (refer to Fig. 4).

Subsequently, as indicated by an arrow M5, a surface on a side, on which the rotation sensor 55 of the sensor substrate 54 is mounted, is caused to face the first sensor conductive parts 57a1 to 57d1 of the four sensor conductive members 57a to 57d. Further, the first sensor conductive parts 57a1 to 57d1 are installed in four through-holes TH provided in the sensor substrate 54, and they are electrically connected to each other using a connection means (not illustrated) such as soldering. Accordingly, the sensor substrate 54 is retained in the substrate retention part 51d.

Thereafter, as indicated by an arrow M6, the O-ring 53 is caused to face the assembly main body 51a of the assembly part 51 in the same direction as an installation direction of the pair of female terminals T. Further, the O-ring 53 is fitted through press-fitting around the assembly main body 51a.

Accordingly, a component assembly step (Step S7) is completed.

As described above in detail, according to Embodiment 1, since the pair of drive conductive members 56a and 56b and the four sensor conductive members 57a to 57d are retained in the holder member 70, the pair of drive conductive members 56a and 56b and the four sensor conductive members 57a to 57d can be precisely disposed at proper locations with respect to the connector member 50.

Therefore, while the four sensor conductive members 57a to 57d which are three-dimensionally bent in a complex manner are used, they can be disposed closer to each other, so that an increase in a thickness dimension of the motor device 10 in an opening direction of the connector connection part 52 can be curbed.

In the process of manufacturing the connector member 50, after installation in the holder member 70 and after insert molding, the first connection part JT1 and the second connection part JT2 are cut such that the four sensor conductive members 57a to 57d are separated. Therefore, these four sensor conductive members 57a to 57d can be more precisely disposed at proper locations with respect to the connector member 50.

Next, Embodiment 2 of the present disclosure will be described in detail using the drawings. The same reference signs are applied to portions having functions similar to those of Embodiment 1 described above, and detailed description thereof will be omitted.

Fig. 14 shows a flowchart describing a procedure of assembling a connector member according to Embodiment 2.

Embodiment 2 differs from Embodiment 1 in only a part of the procedure of assembling the connector member 50. Specifically, Embodiment 2 differs from Embodiment 1 (refer to Fig. 8) in only that work is performed switching [Second insert molding step] (shaded portion) of Step S5 and [Step of cutting second connection part] of Step S6, as indicated by the dotted arrow in Fig. 14.

More specifically, in Embodiment 2, as indicated by an arrow M7 in Fig. 11, in a stage after [First insert molding step] (shaded portion) of Step S4 in Fig. 14 ends, work of removing the second connection part JT2, that is, [Step of cutting second connection part] of Step S6 is performed.

Even in Embodiment 2 having the foregoing constitution, it is possible to exhibit operational effects similar to those of Embodiment 1 described above.

The present disclosure is not limited to the foregoing embodiments, and it goes without saying that various changes can be made. For example, as illustrated in Fig. 1, the foregoing embodiments have described a constitution in which the opening direction of the connector connection part 52 is directed to a side (back side of the view) opposite to a side where the output member 43b is present. However, the present disclosure is not limited thereto and can also be applied to a constitution in which the opening direction of the connector connection part 52 is directed to the side (front side of the view) where the output member 43b is present.

In addition, the foregoing embodiments have described a constitution in which one GMR sensor reacting to a magnetic flux line formed by the sensor magnet 30 is used as the rotation sensor 55. However, the present disclosure is not limited thereto. A plurality of inexpensive MR sensors may be used, or other electromagnetic sensors (Hall IC or the like) may be used.

Moreover, the foregoing embodiments have described a constitution in which the motor device 10 is used as a driving source for a power window device mounted in a vehicle. However, the present disclosure is not limited thereto and can also be used in a driving source for other devices such as a sunroof device.

In addition, the foregoing embodiments have described a constitution in which an electric motor with a brush is used as the motor unit 20. However, the present disclosure is not limited thereto, and a brushless electric motor having a rotary shaft or the like may be used as a motor unit. In this case, in place of the brush holder serving as a power feeding member, a bus bar unit (current collecting device) is used as a power feeding member.

Furthermore, in the foregoing embodiments, the materials, the shapes, the dimensions, the numbers, the installation places, and the like of constituent elements are arbitrary as long as the present disclosure can be realized, and they are not limited to the foregoing embodiments.

### [Industrial Applicability]

A motor device is used as a driving source for a power window device mounted in a vehicle such as an automobile.

### [Reference Signs List]

- 10: motor device
- 11: fastening screw
- 20: motor unit
- 21: motor case
- 21c: small diameter stepped part
- 22: magnet
- 23: coil
- 24: armature
- 26: armature shaft (rotary shaft)
- 27: commutator
- 28: brush
- 29: spring member
- 30: sensor magnet
- 31: worm gear
- 32: first bearing member
- 40: gear unit
- 41: gear case
- 41a: connector member assembly hole
- 41d: fixing part
- 42: gear cover
- 43: worm wheel
- 43a: tooth part
- 43b: output member
- 44: second bearing member
- 45: third bearing member
- 50: connector member
- 51: assembly part
- 51a: assembly main body
- 51b: cap part
- 51c: case part
- 51d: substrate retention part
- 51e: terminal accommodation part
- 51f: case opening part
- 52: connector connection part (plug-in part)
- 52a: bottom part
- 52b: neck part
- 53: O-ring
- 54: sensor substrate (substrate)
- 55: rotation sensor
- 56a, 56b: drive conductive member (drive conductor) (conductive member)
- 56a1, 56b1: first drive conductive part
- 56a2, 56b2: second drive conductive part
- 56a3, 56b3: third drive conductive part
- 56a4, 56b4: fourth drive conductive part
- 57a∼57d: sensor conductive member (sensor conductors)(conductive member)
- 57a1∼57d1: first sensor conductive part
- 57a2~57d2: second sensor conductive part
- 57a3∼57d3: third sensor conductive part
- 57a4∼57d4: fourth sensor conductive part
- 60: brush holder (power feeding member)
- 70: holder member
- 71: front surface
- 72: rear surface
- 73: insertion hole
- 74: holder opening part
- 75: first support part
- 76: second support part
- 77: third support part
- 78a: first support groove
- 78b: second support groove
- A, B, C, M1∼M7: arrow
- BD: reference line
- C1: first intermediate part
- C2: second intermediate part
- D1: first stepped part
- D2: second stepped part
- JT1: first connection part
- JT2: second connection part
- PP1: primary molded resin component (primary molded article)
- PP2: secondary molded resin component (secondary molded article)
- R1: drive side bent part
- R2: sensor side bent part
- S: fixing screw
- SD: speed reducing mechanism
- T: female terminal
- TH: through-hole
- WK: unseparated conductive member (unseparated conductor)
- X, Y, Z: axis
- S1∼S7: step

## Claims

1. A method for manufacturing a motor device including a rotary shaft (26), a power feeding member (60) to which a drive current for rotating the rotary shaft (26) is supplied, and a connector member (50) to which an external connector is connected and which supplies the drive current to the power feeding member (60),
wherein the connector member (50) has
a plug-in part (52) which opens in a direction intersecting an axial direction of the rotary shaft (26) and into which the external connector is plugged,
a substrate retention part (51d) which retains a substrate (54) on which a sensor (55) for detecting a rotation state of the rotary shaft (26) is mounted such that a mounting surface thereof is directed in the axial direction of the rotary shaft (26),
a plurality of drive conductors (56a, 56b) which are provided between the plug-in part (52) and the power feeding member (60), of which one ends are exposed on an inward side of the plug-in part (52), and of which the other ends are connected to the power feeding member (60), and
a plurality of sensor conductors (57a-57d) which are provided between the plug-in part (52) and the substrate (54), of which one ends are exposed on the inward side of the plug-in part (52), and of which the other ends are connected to the substrate (54), and
wherein the motor device manufacturing method is **characterized in** comprising:
a conductor molding step of forming an unseparated conductor (WK) which includes a first connection part (JT1) and a second connection part (JT2) respectively connecting the plurality of sensor conductors (57a-57d) on the plug-in part (52) side and the substrate (54) side, and bending the unseparated conductor (WK) such that an extending direction of the first connection part (JT1) is directed in the axial direction of the rotary shaft (26) and an extending direction of the second connection part (JT2) is directed in a direction intersecting the axial direction of the rotary shaft (26);
a conductor retention step of setting the plurality of drive conductors (56a, 56b) and the unseparated conductor (WK) in a holder member (70) and causing the holder member (70) to retain the plurality of drive conductors (56a, 56b) and the unseparated conductor (WK) respectively at predetermined intervals;
a first separation step of cutting the first connection part (JT1) such that the plug-in part (52) side of the unseparated conductor (WK) is separated;
an insert molding step of insert-molding the plurality of drive conductors (56a, 56b), the unseparated conductor (WK), and the holder member (70) such that the plug-in part (52) and the substrate retention part (51d) are formed; and
a second separation step of cutting the second connection part (JT2) such that the substrate (54) side of the unseparated conductor (WK) is separated.

2. The motor device manufacturing method according to claim 1,
wherein the holder member (70) has a first opening part (74) exposing the first connection part (JT1) to the outside.

3. The motor device manufacturing method according to claim 1,
wherein the substrate retention part (51d) has a second opening part (51f) exposing the second connection part (JT2) to the outside.

4. A method for manufacturing a motor device including a rotary shaft (26), a power feeding member (60) to which a drive current for rotating the rotary shaft (26) is supplied, and a connector member (50) to which an external connector is connected and which supplies the drive current to the power feeding member (60),
wherein the connector member (50) has
a plug-in part (52) which opens in a direction intersecting an axial direction of the rotary shaft (26) and into which the external connector is plugged,
a substrate retention part (51d) which retains a substrate (54) on which a sensor (55) for detecting a rotation state of the rotary shaft (26) is mounted such that a mounting surface thereof is directed in the axial direction of the rotary shaft (26),
a plurality of drive conductors (56a, 56b) which are provided between the plug-in part (52) and the power feeding member (60), of which one ends are exposed on an inward side of the plug-in part (52), and of which the other ends are connected to the power feeding member (60), and
a plurality of sensor conductors (57a-57d) which are provided between the plug-in part (52) and the substrate (54), of which one ends are exposed on the inward side of the plug-in part (52), and of which the other ends are connected to the substrate (54), and
wherein the motor device manufacturing method is **characterized in** comprising:
a conductor molding step of forming an unseparated conductor (WK) which includes a first connection part (JT1) and a second connection part (JT2) respectively connecting the plurality of sensor conductors (57a-57d) on the plug-in part (52) side and the substrate (54) side, and bending the unseparated conductor (WK) such that an extending direction of the first connection part (JT1) is directed in the axial direction of the rotary shaft (26) and an extending direction of the second connection part (JT2) is directed in a direction intersecting the axial direction of the rotary shaft (26);
a conductor retention step of setting the plurality of drive conductors (56a, 56b) and the unseparated conductor (WK) in a holder member (70) and causing the holder member (70) to retain the plurality of drive conductors (56a, 56b) and the unseparated conductor (WK) respectively at predetermined intervals;
a first separation step of cutting the first connection part (JT1) such that the plug-in part (52) side of the unseparated conductor (WK) is separated;
a first insert molding step of insert-molding the plurality of drive conductors (56a, 56b), the unseparated conductor (WK), and the holder member (70) such that a primary molded article (PP1) including the substrate retention part (51d) is formed;
a second separation step of cutting the second connection part (JT2) such that the substrate (54) side of the unseparated conductor (WK) is separated; and
a second insert molding step of forming a secondary molded article (PP2) including the plug-in part (52) through insert molding.

5. The motor device manufacturing method according to claim 4,
wherein the holder member (70) has a first opening part (74) exposing the first connection part (JT1) to the outside.

6. The motor device manufacturing method according to claim 4,
wherein the substrate retention part (51d) has a second opening part (51f) exposing the second connection part (JT2) to the outside.

## Patentansprüche

1. Verfahren zum Herstellen einer Motorvorrichtung, die eine Drehwelle (26), ein Energiezuführungselement (60), dem ein Antriebsstrom zum Drehen der Drehwelle (26) zugeführt wird, und ein Verbinderelement (50) enthält, mit dem ein externer Verbinder verbunden ist und das den Antriebsstrom an das Energiezuführungselement (60) liefert,
wobei das Verbinderelement (50) aufweist
ein Einsteckteil (52), das sich in einer Richtung öffnet, die eine axiale Richtung der Drehwelle (26) schneidet, und in das der externe Verbinder eingesteckt wird,
ein Substrathalteteil (51d), das ein Substrat (54) hält, auf dem ein Sensor (55) zum Erfassen eines Drehzustands der Drehwelle (26) so montiert ist, dass eine Montagefläche davon in die axiale Richtung der Drehwelle (26) gerichtet ist
eine Vielzahl von Antriebsleitern (56a, 56b), die zwischen dem Einsteckteil (52) und dem Energiezuführungselement (60) vorgesehen sind, deren eine Enden an einer Einwärtsseite des Einsteckteils (52) freiliegt und deren andere Enden mit dem Energiezuführungselement (60) verbunden ist, und
eine Vielzahl von Sensorleitern (57a-57d), die zwischen dem Einsteckteil (52) und dem Substrat (54) vorgesehen sind, deren eine Enden an der Einwärtsseite des Einsteckteils (52) freiliegt und deren andere Enden mit dem Substrat (54) verbunden sind, und
wobei das Motorvorrichtung-Herstellungsverfahren **dadurch gekennzeichnet ist, dass** es umfasst:
einen Leiterformungsschritt des Bildens eines ungetrennten Leiters (WK), der ein erstes Verbindungsteil (JT1) und ein zweites Verbindungsteil (JT2) enthält, die jeweils die Vielzahl von Sensorleitern (57a-57d) auf der Seite des Einsteckteils (52) und der Seite des Substrats (54) verbinden, und Biegen des ungetrennten Leiters (WK) so, dass eine Erstreckungsrichtung des ersten Verbindungsteils (JT1) in die axiale Richtung der Drehwelle (26) gerichtet ist und eine Erstreckungsrichtung des zweiten Verbindungsteils (JT2) in eine die axiale Richtung der Drehwelle (26) schneidende Richtung gerichtet ist;
einen Leiterhalteschritt des Einstellens der Vielzahl von Antriebsleitern (56a, 56b) und des ungetrennten Leiters (WK) in ein Halteelement (70) und des Bewirkens, dass das Halteelement (70) die Vielzahl von Antriebsleitern (56a, 56b) und den ungetrennten Leiter (WK) jeweils in vorbestimmten Intervallen hält;
einen ersten Trennungsschritt des Schneidens des ersten Verbindungsteils (JT1), so dass die Seite des Einsteckteils (52) des ungetrennten Leiters (WK) getrennt wird;
einen Einspritzgießschritt des Einspritzgießens der Vielzahl von Antriebsleitern (56a, 56b), des ungetrennten Leiters (WK) und des Halteelements (70), so dass das Einsteckteil (52) und das Substrathalteteil (51d) gebildet werden; und
einen zweiten Trennungsschritt des Schneidens des zweiten Verbindungsteils (JT2), so dass die Seite des Substrats (54) des ungetrennten Leiters (WK) getrennt wird.

2. Motorvorrichtung-Herstellungsverfahren gemäß Anspruch 1,
wobei das Halteelement (70) ein erstes Öffnungsteil (74) aufweist, das das erste Verbindungsteil (JT1) nach außen hin freilegt.

3. Motorvorrichtung-Herstellungsverfahren gemäß Anspruch 1,
wobei das Substrathalteteil (51d) ein zweites Öffnungsteil (51f) aufweist, das das zweite Anschlussteil (JT2) nach außen hin freilegt.

4. Verfahren zum Herstellen einer Motorvorrichtung, die eine Drehwelle (26), ein Energiezuführungselement (60), dem ein Antriebsstrom zum Drehen der Drehwelle (26) zugeführt wird, und ein Verbinderelement (50) enthält, mit dem ein externer Verbinder verbunden ist und das den Antriebsstrom an das Energiezuführungselement (60) liefert,
wobei das Verbinderelement (50) aufweist
ein Einsteckteil (52), das sich in einer Richtung öffnet, die eine axiale Richtung der Drehwelle (26) schneidet, und in das der externe Verbinder eingesteckt wird,
ein Substrathalteteil (51d), das ein Substrat (54) hält, auf dem ein Sensor (55) zum Erfassen eines Drehzustands der Drehwelle (26) so montiert ist, dass eine Montagefläche davon in die axiale Richtung der Drehwelle (26) gerichtet ist
eine Vielzahl von Antriebsleitern (56a, 56b), die zwischen dem Einsteckteil (52) und dem Energiezuführungselement (60) vorgesehen sind, deren eine Enden an einer Einwärtsseite des Einsteckteils (52) freiliegt und deren andere Enden mit dem Energiezuführungselement (60) verbunden ist, und
eine Vielzahl von Sensorleitern (57a-57d), die zwischen dem Einsteckteil (52) und dem Substrat (54) vorgesehen sind, deren eine Enden an der Einwärtsseite des Einsteckteils (52) freiliegt und deren andere Enden mit dem Substrat (54) verbunden sind, und
wobei das Motorvorrichtung-Herstellungsverfahren **dadurch gekennzeichnet ist, dass** es umfasst:
einen Leiterformungsschritt des Bildens eines ungetrennten Leiters (WK), der ein erstes Verbindungsteil (JT1) und ein zweites Verbindungsteil (JT2) enthält, die jeweils die Vielzahl von Sensorleitern (57a-57d) auf der Seite des Einsteckteils (52) und der Seite des Substrats (54) verbinden, und Biegen des ungetrennten Leiters (WK) so, dass eine Erstreckungsrichtung des ersten Verbindungsteils (JT1) in die axiale Richtung der Drehwelle (26) gerichtet ist und eine Erstreckungsrichtung des zweiten Verbindungsteils (JT2) in eine die axiale Richtung der Drehwelle (26) schneidende Richtung gerichtet ist;
einen Leiterhalteschritt des Einstellens der Vielzahl von Antriebsleitern (56a, 56b) und des ungetrennten Leiters (WK) in ein Halteelement (70) und des Bewirkens, dass das Halteelement (70) die Vielzahl von Antriebsleitern (56a, 56b) und den ungetrennten Leiter (WK) jeweils in vorbestimmten Intervallen hält;
einen ersten Trennungsschritt des Schneidens des ersten Verbindungsteils (JT1), so dass die Seite des Einsteckteils (52) des ungetrennten Leiters (WK) getrennt wird;
einen ersten Einspritzgießschritt des Einspritzgießens der Vielzahl von Antriebsleitern (56a, 56b), des ungetrennten Leiters (WK) und des Halteelements (70), so dass ein primärer geformter Gegenstand (PP1), der das Substrathalteteil (51d) enthält, gebildet wird;
einen zweiten Trennschritt des Schneidens des zweiten Verbindungsteils (JT2), so dass die Seite des Substrats (54) des ungetrennten Leiters (WK) getrennt wird; und
einen zweiten Einspritzgießschritt zum Ausbilden eines sekundären geformten Gegenstands (PP2), der das Einsteckteil (52) enthält, durch Einspritzgießen.

5. Motorvorrichtung-Herstellungsverfahren gemäß Anspruch 4,
wobei das Halteelement (70) ein erstes Öffnungsteil (74) aufweist, das das erste Verbindungsteil (JT1) nach außen hin freilegt.

6. Motorvorrichtung-Herstellungsverfahren gemäß Anspruch 4,
wobei das Substrathalteteil (51d) ein zweites Öffnungsteil (51f) aufweist, das das zweite Verbindungsteil (JT2) nach außen hin freilegt.

## Revendications

1. Un procédé de fabrication d'un dispositif moteur comprenant un arbre rotatif (26), un élément (60) d'alimentation électrique auquel un courant d'entraînement pour faire tourner l'arbre rotatif (26) est fourni, et un élément (50) formant connecteur auquel un connecteur externe est connecté et qui fournit le courant d'entraînement à l'élément d'alimentation (60),
l'élément (50) formant connecteur ayant
une partie (52) formant fiche, qui s'ouvre dans une direction venant en intersection avec une direction axiale de l'arbre rotatif (26) et dans laquelle le connecteur externe est enfiché,
une partie (51d) de retenue de substrat qui retient un substrat (54) sur lequel est monté un capteur (55) pour détecter un état de rotation de l'arbre rotatif (26) de telle sorte qu'une surface de montage d'e celui-ci est dirigée dans la direction axiale de l'arbre rotatif (26),
une pluralité de conducteurs d'entraînement (56a, 56b), qui sont prévus entre la partie (52) formant fiche et l'élément (60) d'alimentation électrique, dont des premières extrémités sont exposées sur un côté intérieur de la partie (52) formant fiche, et dont les autres extrémités sont reliées à l'élément (60) d'alimentation électrique, et
une pluralité de conducteurs (57a-57d) de capteurs qui sont prévus entre la partie (52) formant fiche et le substrat (54), dont des premières extrémités sont exposées sur le côté intérieur de la partie (52) formant fiche, et dont les autres extrémités sont reliées au substrat (54), et
le procédé de fabrication de dispositif moteur étant **caractérisé en ce qu'**il comprend :
une étape de moulage de conducteur consistant à former un conducteur non séparé (WK) qui comprend une première partie de connexion (JT1) et une deuxième partie de connexion (JT2) connectant respectivement la pluralité de conducteurs (57a-57d) de capteurs sur le côté partie (52) formant fiche et le côté substrat (54), et à plier le conducteur non séparé (WK) de sorte qu'une direction d'extension de la première partie de connexion (JTL) soit dirigée dans la direction axiale de l'arbre rotatif (26) et qu'une direction d'extension de la deuxième partie de connexion (JT2) soit dirigée dans une direction venant en intersection avec la direction axiale de l'arbre rotatif (26) ;
une étape de rétention de conducteur consistant à placer la pluralité de conducteurs d'entraînement (56a, 56b) et le conducteur non séparé (WK) dans un élément de support (70) et à amener l'élément de support (70) à retenir la pluralité de conducteurs d'entraînement (56a, 56b) et le conducteur non séparé (WK) respectivement à des intervalles prédéterminés ;
une première étape de séparation consistant à couper la première partie de connexion (JT1) de sorte que le côté partie (52) formant fiche du conducteur non séparé (WK) soit séparé ;
une étape de moulage par insertion consistant à mouler par insertion la pluralité de conducteurs d'entraînement (56a, 56b), le conducteur non séparé (WK) et l'élément de support (70) de sorte que la partie (52) formant fiche et la partie (5 1d) de retenue de substrat soient formées ; et
une deuxième étape de séparation consistant à couper la deuxième partie de connexion (JT2) de telle sorte que le côté substrat (54) du conducteur non séparé (WK) soit séparé.

2. Le procédé de fabrication d'un dispositif moteur selon la revendication 1,
dans lequel l'élément de support (70) a une première partie d'ouverture (74) exposant la première partie de connexion (JT1) à l'extérieur.

3. Le procédé de fabrication d'un dispositif moteur selon la revendication 1,
dans lequel la partie (51d) de retenue de substrat a une deuxième partie d'ouverture (51f) exposant la deuxième partie de connexion (JT2) à l'extérieur.

4. Un procédé de fabrication d'un dispositif moteur comprenant un arbre rotatif (26), un élément (60) d'alimentation électrique auquel est fourni un courant d'entraînement pour faire tourner l'arbre rotatif (26), et un élément (50) formant connecteur auquel est connecté un connecteur externe et qui fournit le courant d'entraînement à l'élément d'alimentation (60),
l'élément (50) formant connecteur ayant
une partie (52) formant fiche qui s'ouvre dans une direction venant en intersection avec une direction axiale de l'arbre rotatif (26) et dans laquelle le connecteur externe est enfiché,
une partie (51d) de retenue de substrat qui retient un substrat (54) sur lequel est monté un capteur (55) pour détecter un état de rotation de l'arbre rotatif (26) de telle sorte qu'une surface de montage de celui-ci est dirigée dans la direction axiale de l'arbre rotatif (26),
une pluralité de conducteurs d'entraînement (56a, 56b), qui sont prévus entre la partie (52) formant fiche et l'élément (60) d'alimentation électrique, dont des premières extrémités sont exposées sur un côté intérieur de la partie (52) formant fiche, et dont les autres extrémités sont reliées à l'élément (60) d'alimentation électrique, et
une pluralité de conducteurs (57a-57d) de capteurs qui sont prévus entre la partie (52) formant fiche et le substrat (54), dont des premières extrémités sont exposées sur le côté intérieur de la partie (52) formant fiche, et dont les autres extrémités sont connectées au substrat (54), et
le procédé de fabrication de dispositif moteur est **caractérisé en ce qu'**il comprend :
une étape de moulage de conducteur consistant à former un conducteur non séparé (WK) qui comprend une première partie de connexion (JT 1) et une deuxième partie de connexion (JT2) connectant respectivement la pluralité de conducteurs (57a-57d) de capteurs sur le côté partie (52) formant fiche et le côté substrat (54), et à plier le conducteur non séparé (WK) de sorte qu'une direction d'extension de la première partie de connexion (JT 1) soit dirigée dans la direction axiale de l'arbre rotatif (26) et qu'une direction d'extension de la deuxième partie de connexion (JT2) soit dirigée dans une direction venant en intersection avec la direction axiale de l'arbre rotatif (26) ;
une étape de rétention de conducteur consistant à placer la pluralité de conducteurs d'entraînement (56a, 56b) et le conducteur non séparé (WK) dans un élément de support (70) et à amener l'élément de support (70) à retenir la pluralité de conducteurs d'entraînement (56a, 56b) et le conducteur non séparé (WK) respectivement à des intervalles prédéterminés ;
une première étape de séparation consistant à couper la première partie de connexion (JT1) de sorte que le côté partie (52) formant fiche du conducteur non séparé (WK) soit séparé ;
une première étape de moulage par insertion consistant à mouler par insertion la pluralité de conducteurs d'entraînement (56a, 56b), le conducteur non séparé (WK) et l'élément de support (70) de telle sorte qu'un article moulé primaire (PP1) comprenant la partie (51d) de retenue de substrat soit formé ;
une deuxième étape de séparation consistant à couper la deuxième partie de connexion (JT2) de telle sorte que le côté substrat (54) du conducteur non séparé (WK) soit séparé ; et
une deuxième étape de moulage par insertion consistant à former par moulage par insertion un article moulé secondaire (PP2) comprenant la partie (52) formant fiche.

5. Le procédé de fabrication d'un dispositif moteur selon la revendication 4,
dans lequel l'élément de support (70) a une première partie d'ouverture (74) exposant la première partie de connexion (JT1) à l'extérieur.

6. Le procédé de fabrication d'un dispositif moteur selon la revendication 4,
dans lequel la partie (51d) de retenue de substrat a une deuxième partie d'ouverture (51f) exposant la deuxième partie de connexion (JT2) à l'extérieur.
